Europäisches Patentamt

European Patent Office

Office européen des brevets

(19)

(11) Veröffentlichungsnummer : **0 053 218**
**B1**

(12) # EUROPÄISCHE PATENTSCHRIFT

(45) Veröffentlichungstag der Patentschrift :
**04.07.84**

(21) Anmeldenummer : **80810376.6**

(22) Anmeldetag : **02.12.80**

(51) Int. Cl.³ : **F 16 N   7/34, D 03 J   1/00**

(54) **Impuls-Schmiervorrichtung für eine Webmaschine.**

(43) Veröffentlichungstag der Anmeldung :
**09.06.82 Patentblatt 82/23**

(45) Bekanntmachung des Hinweises auf die Patenterteilung : **04.07.84 Patentblatt 84/27**

(84) Benannte Vertragsstaaten :
**DE FR GB IT**

(56) Entgegenhaltungen :
**GB-A-   105 386**
**GB-A- 1 227 276**
**US-A- 1 960 715**
**US-A- 2 887 181**
**US-A- 3 606 936**

(73) Patentinhaber : **GEBRÜDER SULZER AKTIENGE-**
**SELLSCHAFT**
**Zürcherstrasse 9**
**CH-8401 Winterthur (CH)**

(72) Erfinder : **Burgbacher, Herbert**
**Klostergasse 7**
**D-7701 Hilzingen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 053 218 B1

## Beschreibung

Die Erfindung betrifft eine Impuls-Schmiervorrichtung für eine Webmaschine, mit einem Schmiermittelvorratsbehälter, mindestens einem das Schmiermittel aus dem Vorratsbehälter ansaugenden Vernebler und einem diesem nachgeschalteten, oberhalb des Vorratsbehälters angeordneten Grobabscheider. Der Grobabscheider dient dabei zur Abscheidung der aus dem Vernebler stammenden, grösseren Schmiermittelpartikel, während die kleinen Schmiermittelpartikel in Form von Schmiermittelnebel zu den Schmierstellen der Webmaschine geleitet werden. Im folgenden ist als Schmiermittel beispielsweise Oel angenommen.

Bei einer bisherigen Vorrichtung der genannten Art werden die im Grobabscheider abgetrennten, grösseren Oelpartikel in den darunter befindlichen Oelvorratsbehälter geleitet. Es besteht keine Trennung zwischen Grobabscheider und Oelvorratsbehälter (siehe z. B. G.B-A-1227276).

Der Oelvorratsbehälter soll ein nicht zu geringes Volumen von mindestens ein Liter oder mehr aufweisen, damit nicht zu häufig durch den Weber Oel während des Betriebes nachgefüllt werden muss. Wenn das Oelniveau während des Betriebes allmählich absinkt, so entsteht oberhalb des Oelniveaus in dem Oelvorratsbehälter ein sich mehr und mehr vergrösserndes Totvolumen, welches ein Luftkissen bildet, in welches die Oelnebelimpulse, welche den Vernebler verlassen, aufgefangen werden können. Dadurch nimmt der Druck in dem Bereich zwischen der Oelausströmöffnung des Verneblers und den Schmierstellen im Moment eines Oelnebelimpulses mit dem Absinken des Niveaus in dem Oelvorratsbehälter mehr und mehr ab. Hierdurch sinkt auch die Schmierintensität, d. h. die an einer Schmierstelle ausgestossene Oelnebelmenge sowie die Intensität des Oelnebels ebenfalls ab, so dass die Schmierwirkung in unerwünschter Weise während des Betriebes immer geringer wird.

Der Sekundärdruck fällt an den Schmierstellen bei der bekannten Vorrichtung mit dem Absinken des Niveaus im Oelvorratsbehälter bei gleicher Impulsdauer verhältnismässig stark ab. Dies ist bedingt durch das relativ grosse Totvolumen oberhalb des Niveaus im Vorratsbehälter, welches bei Absinken des Oelniveaus während des Betriebes entsteht. Infolge dieses grossen Totvolumens sinkt bei der bekannten Vorrichtung auch der Sekundärdruck an den Schmierstellen ab. Die Folge davon ist, dass auch die Schmierwirkung bzw. der Wirkungsgrad der Schmierung nachlassen. Dies ergibt sich daraus, dass bei absinkendem Sekundärdruck ein relativ grosser Anteil von Oeltröpfchen des Schmiernebels in die Umgebung entweichen kann anstatt gezielt auf die jeweilige Schmierstelle zu gelangen.

Der Erfindung liegt die Aufgabe zugrunde, eine besonders in dieser Hinsicht verbesserte Impuls-Schmiervorrichtung, insbesondere mit konstantem, vom Oelniveau in dem Oelvorratsbehälter unabhängigem Druck der an den Schmierstellen auszustossenden Oelnebelimpulse zu schaffen.

Die Erfindung besteht darin, dass unterhalb des Grobabscheiders ein in den Vorratsbehälter hineinragender Schmiermittelauffangbehälter druckfest angeordnet ist, dessen Volumen relativ zu dem Volumen des Schmiermittelvorratsbehälters wesentlich kleiner ist und dass am unteren Ende des Auffangbehälters ein Rückschlagventil angebracht ist, welches unter dem Momentan-Ueberdruck eines Schmiernebelimpulses schliesst und danach wieder öffnet.

Durch den so gestalteten Auffangbehälter unterhalb des Grobabscheiders kann erreicht werden, dass oberhalb des in dem Auffangbehälter befindlichen Oelniveaus ein relativ kleines Totvolumen existiert. Dieses ist relativ zu dem Volumen der Leitungen bzw. Räume zwischen der Oelausströmöffnung des Verneblers und den Schmierstellen ebenfalls verhältnismässig gering. Hieraus folgt, dass bei Schwankungen des genannten Totvolumens die durch die Impuls-Schmierung entstehenden Druckänderungen (Sekundärdruck) ebenfalls relativ gering sind, so dass sich an den Schmierstellen eine praktisch konstante Schmierwirkung erreichen lässt.

Weitere Merkmale ergeben sich aus der folgenden Beschreibung von Ausführungsbeispielen in Verbindung mit der Zeichnung und den Ansprüchen.

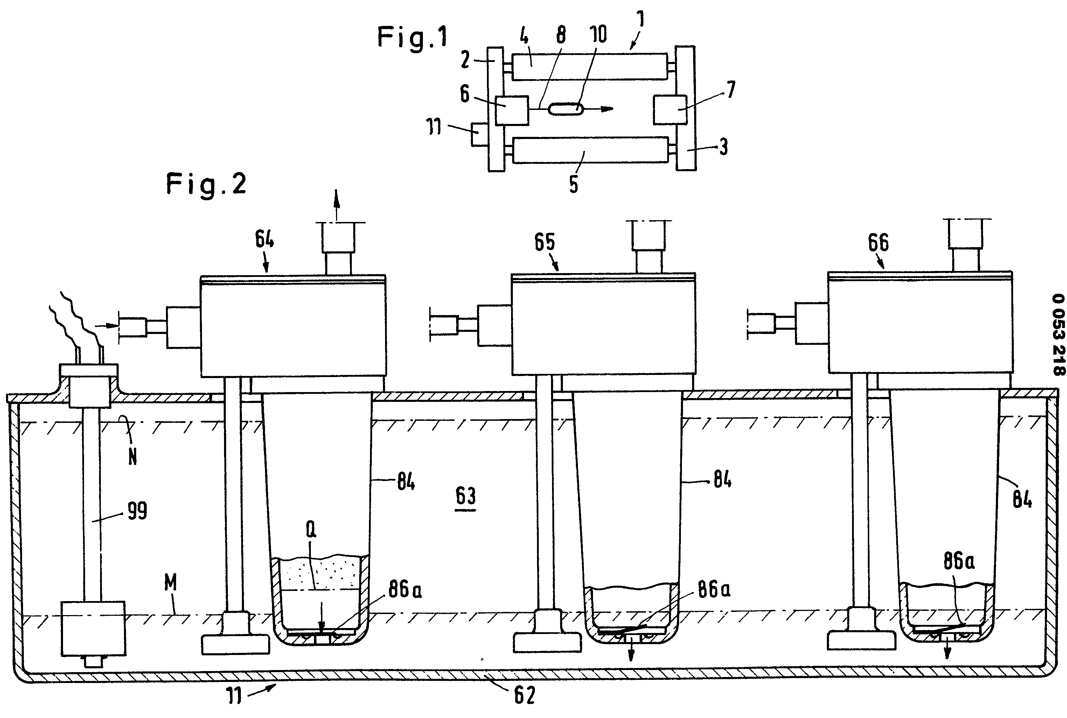

Figur 1 zeigt eine schematische Draufsicht auf eine Webmaschine mit der erfindungsgemäss ausgebildeten Schmiervorrichtung,

Figur 2 ist ein Schnitt durch wesentliche Teile der Schmiervorrichtung in grösserem Massstab,

Figur 3 ist ein Vertikalschnitt durch ein Detail nach Fig. 2, in noch grösserem Massstab,

Figur 4 ein Schnitt nach Linie IV-IV in Fig. 3 und

Figur 5 veranschaulicht einige Schmierstellen an der Webmaschine.

Die als Ganzes mit 1 bezeichnete Webmaschine enthält zwei Seitenwangen 2, 3, einen dazwischen angeordneten Kettbaum 4 und einen Warenbaum 5, ein Schusswerk 6 und ein Fangwerk 7 für das den Schussfaden 8 in das Webfach eintragende Projektil 10. An der Wange 2 ist eine als Ganzes mit 11 bezeichnete Impulsschmiervorrichtung für verschiedene Schmierstellen 17 der Webmaschine angebracht.

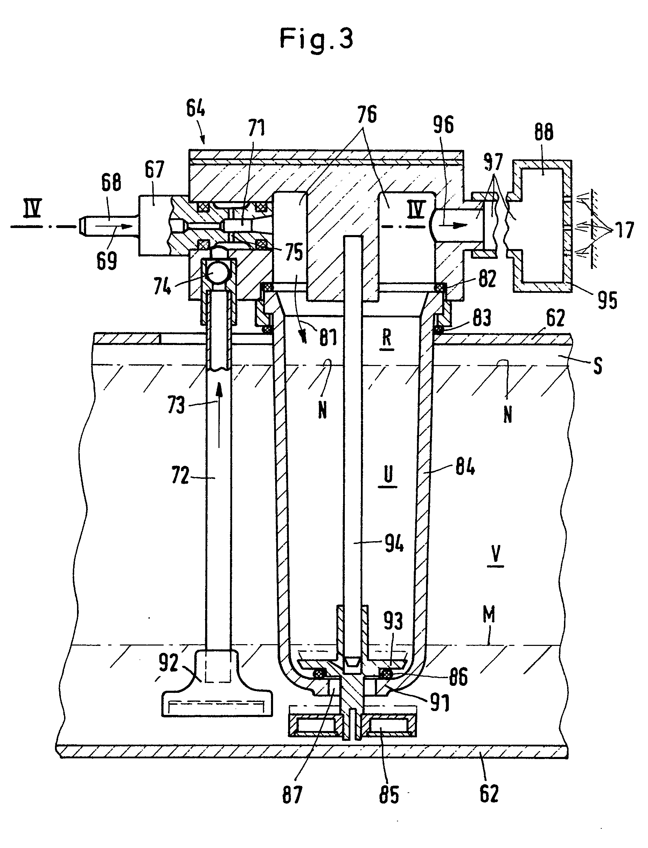

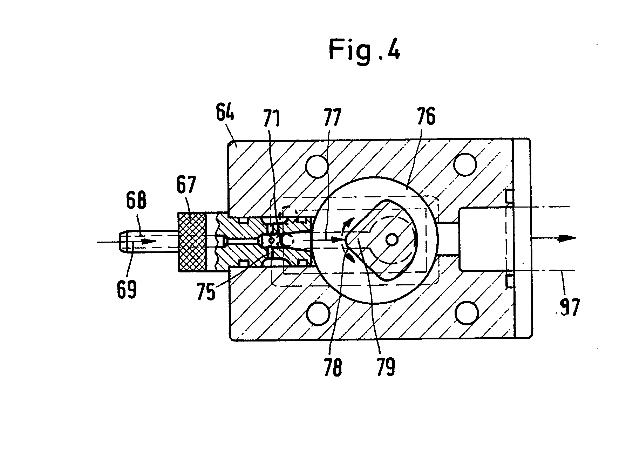

Die Schmiervorrichtung 11 enthält einen Oelvorratsbehälter 62 für das Schmieröl 63. Oberhalb des Vorratsbehälters 62 sind bei dem Beispiel drei Oelverneblerköpfe 64, 65, 66 angeordnet, die sämtlich gleich ausgebildet sind und von denen einer in Fig. 3, 4 dargestellt ist. Jeder Oelverneblerkopf enthält eine Oelverneblerdüse 67, welcher über einen Kanal 68 von einer Steuervorrichtung Luftimpulse (Primärdruck) gemäss Pfeil 69 zugeführt werden. Aufgrund der in dem Kanal 71 durch Querschnittsvergrösserung erzielten Venturi-Wirkung wird über ein Ansaugrohr 72 Oel aus dem Vorratsbehälter 62 entsprechend Pfeil 73 nach oben gesaugt. Das Oel gelangt über ein Rückschlagventil 74 und einen Kanal 75 in den Kanal 71. In diesem wird es mit der zugeführten Luft vermischt, so dass Oelnebel unter Sekundärdruck in einen Raum 76 des Verneblerkopfes gelangt, (vgl. Pfeil 77). Das Oel gelangt auf eine Prallfläche 78 eines nierenförmigen Querschnitt aufweisenden Kernes 79 des Verneblerkopfes 64, wodurch die Oelpartikel von grösserer Gestalt und grösserem Gewicht ausgeschieden werden und gemäss Pfeil 81 absinken.

Die Teile 78, 79 bilden einen Grobabscheider für das Oel. Unterhalb des Grobabscheiders ist unter Zwischenlage von Dichtungen 82, 83 ein Auffangbehälter 84 angeflanscht, der nach aussen und gegenüber dem Oelvorratsbehälter 62 druckfest ist. Das Volumen U (z. B. 50 cm³) des Auffangbehälters 84 ist relativ zu dem Volumen V (z. B. 1 000 cm³) des Vorratsbehälters 62 gering. Infolgedessen ist auch das oberhalb des Oelniveaus N befindliche Totvolumen R (z. B. 10 cm³) in dem Auffangbehälter 84 relativ zu dem Totvolumen S (z. B. 200 cm³) oberhalb des Oelniveaus im Vorratsbehälter 62 relativ gering.

Der erzeugte Oelnebelimpuls wird über eine Leitung 97 in einen Verteilraum 88 und von hier weiter zu mehreren Schmierstellen 17 der Webmaschine 1 geleitet.

Am unteren Ende des Auffangbehälters 84 ist ein von einem in dem Vorratsbehälter 62 befindlichen Schwimmer 85 gesteuertes Rückschlagventil 86 angeordnet, durch welches bei Offenstellung das Volumen U mit dem Volumen V in Verbindung steht. Es kann auch ein Flatterventil 86a benutzt werden.

Wenn während des Betriebes Luftimpulse unter dem Primärdruck entsprechend Pfeil 69 in den Oelvernebler 64 geleitet werden, stellt sich jedesmal in Raum 76 und dem Totvolumen R kurzfristig der Sekundärdruck ein, durch welchen das Rückschlagventil 86 in die in Fig. 3 dargestellte Schliessstellung geführt wird. Dadurch lässt sich in den Räumen 76, 88 konstanter und genügend grosser Druck aufrechterhalten, so dass während der Oelnebelimpulse eine immer ausreichende Oelnebelmenge zu den Schmierstellen 9 gelangen kann.

Nach Beendigung eines eingeleiteten Luftimpulses und des zugehörigen Oelnebelimpulses sinkt der Druck in den Räumen 76 und R wieder ab, so dass das Rückschlagventil 86 unter der Wirkung des in Fig. 3 aufwärts bewegten Schwimmers 85 geöffnet wird. Dadurch kann das Niveau N im Innern des Auffangbehälters 84 und im Vorratsbehälter 62 ausgeglichen, d. h. auf gleiche Höhe gebracht werden. Während des Oelnebelimpulses wird entsprechend Pfeil 81 jeweils eine gewisse Oelmenge abgeschieden und in den Auffangbehälter 84 geleitet, so dass bei geschlossenem Rückschlagventil 86 das Niveau N im Behälter 84 vorübergehend etwas ansteigen kann. Dieser Anstieg wird in der folgenden Offenphase des Ventiles 86 ausgeglichen, d. h. das überschüssige Oel kann durch die Oeffnung 87 in den Vorratsbehälter 62 überströmen. Das Ölniveau wird durch einen Niveauwächter 99 überwacht.

Wenn nach einiger Betriebsdauer das Oelniveau N von seinem in Fig. 3 dargestellten Maximalwert absinkt und allmählich auf den Minimalwert M gelangt, so sinkt das Niveau im Auffangbehälter 84 wegen des immer wieder kehrenden Ausgleiches durch die Oeffnung 87 ab. Der Totraum R wird dadurch zwar grösser, aber relativ zu den Räumen 76, 88 und dem Leitungssystem 97 bleibt er immer noch gering, so dass bei den Oelnebelimpulsen jeweils genügend Druck in diesen Räumen und im Leitungssystem zu den Schmierstellen 17 besteht. Die Schmierwirkung an den Schmierstellen 17 ist daher praktisch unabhängig von dem im Vorratsbehälter 62 vorhandenen Momentanniveau des Oeles, das zwischen den Werten N und M schwanken kann.

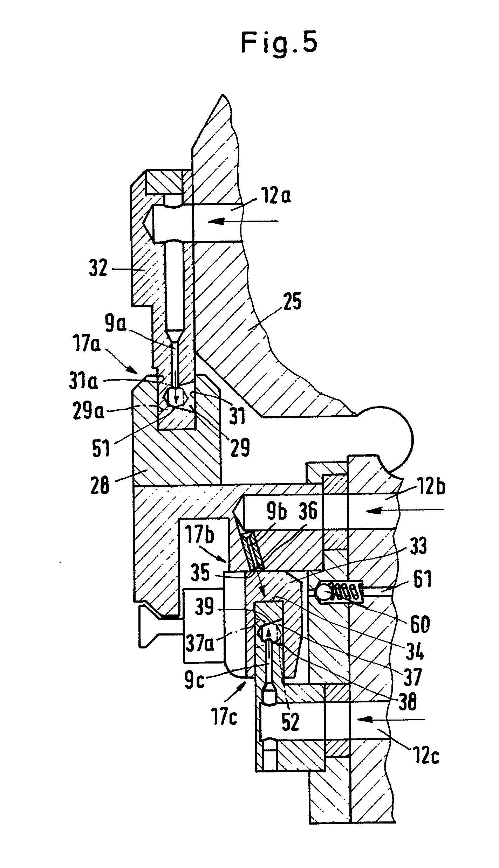

In Fig. 5 sind beispielsweise drei Schmierstellen 17a, b, c im Schusswerkgehäuse 25 der Webmaschine dargestellt. Jede Schmierstelle enthält eine Zuführungsleitung 12a, b, c und eine Düse 9a, b, c. Bei Schmierstelle 17a werden Oelnebel und Luftimpulse während des senkrecht zur Zeichenebene Verlaufenden Hin- und Herganges des Antriebsgleitstückes 28 eines nicht gezeichneten Fadengebers bzw. -rückholers durch einen Sprühraum 29 bzw. 29a eingeleitet. Der Oelnebel gelangt teilweise auf eine gegenüberliegende Prallfläche 51 der Sprühräume. Die Oelpartikel gelangen auf die zu schmierenden Flächen 31 bzw. 31a zwischen dem Gleitstück 28 und einer ortsfesten Führungsschiene 32.

Bei der Schmierstelle 17b gelangen Oelnebel und Luftimpulse während der ebenfalls senkrecht zur Zeichenebene hin- und herverlaufenden Bewegung eines Projektilschlagstückes 33 wechselweise auf eine Schmierstelle 35 bzw. 34, je nachdem ob das Schlagstück 33 die Düsenöffnung 36 abdeckt oder frei gibt.

Ausserdem ist eine weitere Schmierstelle 17c für das Schlagstück 33 vorgesehen. Der durch Düse 9c kommende Oelnebelimpuls sowie der Spülluftimpuls gelangen durch einen in der Zeichenebene liegenden Sprühraum 37 mit Prallfläche 39 sowie durch einen hinter der Zeichenebene liegenden Sprühraum 37a auf zwei Schmierflächen 38.

Es kann eine Oeffnung 61 mit Kugelventil 60 zum Absaugen des Oelnebels (Verlustölnebel) durch Absaugimpulse in passender Programmfolge vorgesehen sein.

Wie aus Fig. 3 ersichtlich ist, ragt der Auffangbehälter 84 mit seinem unteren, das Ventil 86 tragenden Ende 91 im Behälter 62 soweit nacht unten, dass Ventil 86 und Bohrung 87 unterhalb des minimal zulässigen, unteren Oelniveaus M liegen. Ebenso ist der Saugkopf 92 des Ansaugrohres 72 so tief angeordnet, dass er ebenfalls unterhalb des Niveaus M liegt. Wie ebenfalls aus Fig. 3 ersichtlich, befindet sich das Ansaugrohr 72 ausserhalb des Auffangbehälters 84 in dem Vorratsbehälter 62.

Statt des Rückschlagventiles 86, dessen Teller 93 auf der im Kern 79 angebrachten Stange 94 zu gleiten vermag, kann auch ein anderes Rückschlagorgan, z. B. ein mit einer beweglichen Platte versehenes Flatterventil 86a verwendet werden.

Bei dem für die Schmierstellen 17 bestimmten Oelnebel ist angestrebt, dass nur Oelpartikel von geringem Gewicht bzw. Volumen enthalten sind, die Partikel von grösserem Oelvolumen sollen im Grobabscheider 78, 79 abgeschieden werden. Auf diese Weise lässt sich eine sogenannte Magerschmierung erzielen. Durch sie lässt sich vermeiden, dass das Gewebe bzw. die zugeführten Fäden durch übermässig geschmierte Maschinenteile wie insbesondere durch das Projektil 10 verschmutzt werden können.

Ferner lässt sich durch die Oelnebelimpulse, welche aus den Schmierstellen 17 treten, auch eine Reinigung der Schmierstellen von Faserflug erzielen.

**Ansprüche**

1. Impuls-Schmiervorrichtung (11) für eine Webmaschine (1), mit einem Schmiermittelvorratsbehälter (62), mindestens einem das Schmiermittel aus dem Vorratsbehälter ansaugenden Vernebler (67) und einem diesem nachgeschalteten, oberhalb des Vorratsbehälters angeordneten Grobabscheider (78, 79), dadurch gekennzeichnet, dass unterhalb des Grobabscheiders (78, 79) ein in den Vorratsbehälter (62) hineinragender Schmiermittelauffangbehälter (84) druckfest angeordnet ist, dessen Volumen (U) relativ zu dem Volumen (V) des Schmiermittelvorratsbehälters (62) wesentlich kleiner ist und dass am unteren Ende des Auffangbehälters (84) ein Rückschlagventil (86, 86a) angebracht ist, welches unter dem Momentan-Ueberdruck eines Schmiernebelimpulses schliesst und danach wieder öffnet.

2. Vorrichtung nach Anspruch 1, dadurch gekennzeichnet, dass das Rückschlag-ventil (86, 86a) von einem in dem Schmiermittelvorratsbehälter (62) befindlichen Schwimmer (85) gesteuert ist.

3. Vorrichtung nach den Ansprüchen 1 und 2, dadurch gekennzeichnet, dass der druckfeste Auffangbehälter (84) mit seinem unteren Ende (91) bis unterhalb des minimalen Schmiermittelniveaux (M) in dem Schmiermittelvorratsbehälter (62) reicht.

4. Vorrichtung nach einem der vorhergehenden Ansprüche, dadurch gekennzeichnet, dass eine in den Schmiermittelvorratsbehälter (62) ragende Ansaugleitung (72) des Verneblers (67) ausserhalb des druckfesten Auffangbehälters (84) angeordnet ist.

5. Vorrichtung nach Anspruch 4, dadurch gekennzeichnet, dass die Ansaugleitung (72) bis unterhalb des minimalen Schmiermittelniveaus (M) in dem Schmiermittelvorratsbehälter (62) reicht.

**Claims**

1. Pulse lubricating device (11) for a weaving loom (1) comprising a lubricant reservoir (62), at least one atomizer (67) which draws the lubricant from the reservoir, and a macroseparator (78, 79) disposed downstream of the atomizer and above the reservoir, characterized in that below the macroseparator (78, 79) a lubricant catch basin (84) protruding into the reservoir (62) is disposed in pressure-proof relation, the volume (U) of the catch basin (84) being substantially smaller than the volume (V) of the lubricant reservoir (62), and that at the lower end of the catch basin (84) a check valve (86, 86a) is provided, which closes under the instantaneous positive pressure of a lubricant spray pulse and then opens again.

2. Device according to claim 1, characterized in that the check valve (86, 86a) is controlled by a float (85) in the lubricant reservoir (62).

3. Device according to claim 1 and 2, characterized in that the pressure-proof catch basin (84) extends by its lower end (91) to below the minimum lubricant level (M) in the lubricant reservoir (62).

4. Device according to one of the preceding claims, characterized in that a suction line (72) of the atomizer (67) protruding into the lubricant reservoir (62) is disposed outside the pressure-proof catch basin (84).

5. Device according to claim 4, characterized in that the suction line (72) extends to below the minimum lubricant level (M) in the lubricant reservoir (62).

**Revendications**

1. Dispositif de lubrification à impulsions (11) pour une machine à tisser (1), comprenant un réservoir (62) de lubrifiant, au moins un vaporisateur (67) aspirant le lubrifiant hors du réservoir et un séparateur grossier (78, 79) monté en aval du vaporisateur et disposé au-dessus du réservoir, caractérisé en ce que, en dessous du séparateur grossier (78, 79), est disposé de manière à résister à la pression un récipient (84) collecteur du lubrifiant plongeant dans le réservoir (62) et dont le volume (U) est bien plus petit relativement au volume (V) du réservoir de lubrifiant (62), et en ce que, à l'extrémité inférieure du récipient collecteur (84), se trouve une soupape anti-retour (86, 86a) qui se ferme par la surpression momentanée d'une impulsion de pulvérisation de lubrifiant et ensuite s'ouvre à nouveau.

2. Dispositif selon la revendication 1, caractérisé en ce que la soupape anti-retour (86, 86a) est commandée par un plongeur (85) se trouvant dans le réservoir (62) de lubrifiant.

3. Dispositif selon les revendications 1 et 2, caractérisé en ce que le récipient collecteur (84) résistant à la pression atteint, par son extrémité inférieure (91), un endroit se trouvant en dessous du niveau minimal de lubrifiant (M) dans le réservoir (62) de lubrifiant.

4. Dispositif selon l'une des revendications précédentes, caractérisé en ce qu'une conduite d'aspiration (72) du vaporisateur (67) pénétrant dans le réservoir (62) de lubrifiant est disposée en dehors du récipient collecteur (84) résistant à la pression.

5. Dispositif selon la revendication 4, caractérisé en ce que la conduite d'aspiration (72) pénètre juste en dessous du niveau minimal de lubrifiant (M) dans le réservoir (62) de lubrifiant.

Fig.1

Fig.2

0 053 218

# Fig.3

## Fig.4

# Fig.5